Europäisches Patentamt

European Patent Office

Office européen des brevets

(19)

(11) Publication number : **0 535 266 B1**

(12) **EUROPEAN PATENT SPECIFICATION**

(45) Date of publication of patent specification :
10.08.94 Bulletin 94/32

(51) Int. Cl.⁵ : **B01L 3/14**

(21) Application number : 91116734.4

(22) Date of filing : 01.10.91

(54) Evacuated container for collecting blood.

(43) Date of publication of application :
07.04.93 Bulletin 93/14

(45) Publication of the grant of the patent :
10.08.94 Bulletin 94/32

(84) Designated Contracting States :
BE CH DE DK ES FR GB IT LI LU NL SE

(56) References cited :
EP-A- 0 353 710
JP-A- 3 193 325
US-A- 5 034 252

(72) Inventor : **Ebara, Yukinori**
**29-20, Toyotsu-cho**
**Suita-shi, Osaka-fu (JP)**
Inventor : **Yoshioka, Hiroshi**
**18-2, Jonan-cho 4-chome**
**Takatsuki-shi, Osaka-fu (JP)**
Inventor : **Hama, Yoshihisa**
**15-7, Hanazono-cho**
**Otsu-shi, Shiga-ken (JP)**

(74) Representative : **Türk, Gille, Hrabal, Leifert**
**Brucknerstrasse 20**
**D-40593 Düsseldorf (DE)**

(73) Proprietor : **NISSHO CORPORATION**
**9-3, Honjo-nishi 3-chome**
**Kita-ku**
**Osaka-shi (JP)**

EP 0 535 266 B1

## Description

The present invention relates to an evacuated container for collecting blood. More particularly, it relates to an evacuated tubular container for collecting blood wherein a change of the inside vacuum with the passage of time till use is little. Namely, the inside pressure at a vacuum of the container hardly changes for the duration of storage.

An evacuated container for collecting blood is used for tests and measurements such as a biochemical test, a serological test, a hematological test, a measurement of blood sugar, a blood-clotting test, an erythrocyte sedimentation rate test and a bacteriological test. Usually, a container for collecting blood comprises a tube with one closed end and one open end, and a rubber stopper which is fitted on the open end. Before use, the above-mentioned container comprising a tube with one closed end and a rubber stopper is evacuated. Then, the inside pressure of the evacuated container is kept in a suitable vacuum condition in order to enable to collect a necessary amount (2 to 20 m$\ell$) of blood.

Hitherto a material of the tube with one closed end in the above-mentioned evacuated container has been glass. However, glass is fragile in handling, procedure of high-speed centrifugation and the like. Therefore, recently glass has been replaced by synthetic resins.

As synthetic resins used in an evacuated container for collecting blood, there are selected a polyester, a polyethylene, a polypropylene and the like. Among them, a polyester is employed in general by reason that a polyester is better than a polyethylene, a polypropylene or the like as to gas impermeability. However, a polyester is inferior to glass in gas impermeability because oxygen gas and nitrogen gas pass through the tube made of a polyester. Therefore, a vacuum condition can not be kept inside the container comprising the tube made of a polyester in case of a long-term storage. This problem is also addressed in EP-A- 0353710. The evacuated container for collecting blood comprising the tube made of a currently used synthetic resin has an inferior gas impermeability in comparison with that of an evacuated container for collecting blood comprising the tube made of glass. By reason of the mentioned above, studies of packaging material for an evacuated container for collecting blood comprising the tube made of the synthetic resin have been carried out, for instance, the evacuated container for collecting blood is vacuously packaged for storage, the specific gas is filled inside a package of the evacuated container for collecting blood, and the like.

An object of the invention is to provide an evacuated container for collecting blood comprising the tube made of a synthetic resin which has an excellent gas impermeability. According to the present invention, the inside of the evacuated container for collecting blood can be kept at a vaccum over a long period of time till use.

This and the other objects of the present invention will become apparent from the description hereinafeter.

In accordance with the present invention, there is provided an evacuated container for collecting blood, which comprises:

a tube with one closed end and one open end;

said tube prepared from a composition comprising 99.5 to 92 % by weight of polyethylene terephthalate, 0.5 to 8 % by weight of a polyamide having m-xylylene group and 1 to 100 ppm, based on said polyethylene terephthalate and said polyamide having m-xylylene group, of a salt of a transition metal; and

a stoppering means for stoppering the open end of said tube to keep the inside of said tube at a vaccum.

According to the evacuated container as mentioned above the object of the present invention can be attained.

Now, there is explained an evacuated container for collecting blood of the present invention in detail.

In the present invention, the term "a stoppering means" implies a means for fitting on the open end of the tube in the evacuated container for collecting blood. That is, the open end of the tube is stoppered with the stoppering means to keep the inside of the tube at a vaccum. The stoppering means can be pierced with a blood drawing needle. On the occasion of using the evacuated container for collecting blood of the present invention, one end of a blood drawing needle is inserted into a vein and the other end of the blood drawing needle is inserted into the evacuated container through the stoppering means. Blood is drawn into the evacuated container through the blood drawing needle due to the vaccum in the container. Examples of the stoppering means are, for instance, a rubber stopper having an elasticity enabling to remove and fit; a stoppering means comprising a means for impermeating gas and a means for sealing; and the like.

In the present invention, the term "a tube with one closed end" means a tube which can be used in an evacuated container for collecting blood. Examples of the tube with one closed end are, for instance, a tube having an outer diameter of 10 to 16 mm ($\varnothing$), a length of 60 to 170 mm and a thickness of 1 to 2 mm, and the like.

The polyethylene terephthalate used in the present invention is a widely used polyester which may be obtained by reacting ethylene glycol, and terephthalic acid or an ester thereof (especially, dimethyl terephthalate).

Also, the above polyethylene terephthalate includes a polyethylene terephthalate containing recurrent units of ethylene terephthalate in a ratio not less than 80 %. Examples of copolymerizable components are, for instance, isophthalic acid, naphthalenedicarboxylic acid, a p-oxybenzoic acid derivative; butanediol, and the like.

It is preferred in molding that the molecular weight of the above-mentioned polymer of the polyester is 0.6 to 0.9 as intrinsic viscosity [ η ] to give a satisfactory tube with the closed end. Such intrinsic viscosity is a value measured at 25°C in a solution obtained by dissolving 0.25 g of the polymer in 100 mℓ of a mixture of 3 parts by weight of phenol and 2 parts by weight of 1,1,2,2-tetrachloroethane.

The polyamide having m-xylylene group used in the present invention comprises as an amine component at least one diamine selected from the group consisting of (1) m-xylylenediamine, (2) a mixture of m-xylylenediamine and p-xylylenediamine, and (3) a mixture of m-xylylenediamine and hexamethylenediamine; and as an acid component at least one carboxylic acid selected from the group consisting of adipic acid, pimelic acid, suberic acid, azelaic acid and sebacic acid. As the polyamide having m-xylylene group of the present invention, poly-m-xylylene adipamide is preferable. It can be considered that the polyamide having m-xylylene group of the present invention plays a role in the improving of gas impermeability of the tube with the closed end.

As a transition metal used in the present invention, there are exemplified cobalt, nickel, rhodium and the like. In the present invention, a transition metal is used in a form of a salt. Examples of salts of the transition metals used in the present invention are, for instance, cobalt acetate, cobalt naphthenate, cobalt stearate, nickel acetylacetonate, nickel chloride, rhodium chloride, and the like.

The tube of the present invention which is prepared by mixing a polyamide having m-xylylene group and a salt of a transition metal, absorbs oxygen gas.

The material of the tube with the closed end of the present invention is a mixture of polyethylene terephthalate, a polyamide having m-xylylene group and a salt of a transition metal. A mold may be charged with the three components at once in a molding step. Alternatively, the three components may be previously mixed before charging a mold with the mixture of the three components.

Since the tube with the closed end of the present invention is molded by mixing a polyamide having m-xylylene group, it is possible to yellow a product. However, such yellow in the product can turn colorless by well balancing constitution of the above-mentioned three components. Also, such yellow can be made inconspicuous by adding up to 4 % by weight, based on the polyethylene terephthalate, of a master pellet containing a blue pigment or purple pigment to the mixture of the three components. As the master pellet, polyethylene terephthalate is used. The master pellet contains, for instance, 1 % of the pigment. It is preferable that the master pellet containing a blue pigment or purple pigment is added to the mixture in the equal amount to that of a polyamide having m-xylylene group. Examples of such pigment used in the present invention are, for instance, Blue No. 1 (C I 42090), Blue No. 2 (C I 73015), Blue No. 201 (C I 73000), Blue No. 202 (C I 42052), Blue No. 203 (C I 42052), Blue No. 204 (C I 69825), Blue No. 403, Purple No. 201 (C I 60725), and the like.

In the present invention, the tube is prepared by mixing a polyamide having m-xylylene group, a widely used polyester and a salt of a transition metal in order to give the tube with the closed end which has an excellent gas impermeability and to absorb oxygen gas. It is considered that a salt of a transition metal is a catalyst to accelerate such behavior.

In the evacuated container for collecting blood comprising the tube made of the synthetic resin of the present invention which has an excellent gas impermeability, as described above, oxygen gas is absorbed and then the inside of the evacuated container for collecting blood can be kept at a vacuum during a long period of time before use.

In the present invention, it is necessary that each mixed ratio in the above-mentioned mixture is 99.5 to 92 % by weight, preferably 99 to 96 % by weight as polyethylene terephthalate and 0.5 to 8 % by weight, preferably 1 to 4 % by weight as a polyamide having m-xylylene group. In case that a ratio of a polyamide having m-xylylene group is more than 8 % by weight, transparency is deteriorated and a cost for material of the tube is made expensive. On the other hand, in case that a ratio of a polyamide having m-xylylene group is less than 0.5 % by weight, the capacity for absorbing oxygen gas is deteriorated.

In the present invention, it is necessary to contain 1 to 100 ppm, preferably 2 to 50 ppm of a salt of a transition metal. In case that a content of a salt of a transition metal is more than 100 ppm, the obtained tube is colored to deteriorate transparency and a cost for material of the tube is made expensive. On the other hand, in case that a content of a salt of a transition metal is less than 1 ppm, the function of the catalysis which accelerates to absorb oxygen gas is deteriorated.

The polymer used for preparing the tube with the closed end of the present invention may contains additive(s) which does not exert a bad influence. Examples of the additives are, for instance, an antioxidant, an agent for blocking ultraviolet rays, an auxiliary agent for extruding, an additive for improving the polymers and the like.

The present invention is more specifically described and explained by means of the following Examples, Comparative Example and Test Examples in which all parts are by weight unless otherwise noted. It is to be understood that the present invention is not limited to the Examples, the Comparative Examples and the Test Examples.

Examples 1 to 10 and Comparative Examples 1 to 3

Using material(s) shown in Table 1, each tube with one closed end and one open end for collecting 5 ml of blood having a thickness of 1.3 mm, a length of 75 mm and an inner diameter of 10.8 mm, was prepared. Thus obtained tube was tightly stoppered with a rubber stopper made of butyl gum.

In each group, ten containers were prepared.

In Table 1, polyethylene terephthalate, poly-m-xylylene adipamide and a dye classified in anthraquinones were used as a polyester, a polyamide having m-xylylene group and a blue pigment, respectively.

## Table 1

| Number | Ratio by weight of Polyester/Polyamide having m-xylylene group/Master pellet containing blue pigment | Concentration of cobalt (ppm) |
|---|---|---|
| Ex. 1 | 100/1/0 | 23 |
| Ex. 2 | 100/1/0 | 5 |
| Ex. 3 | 100/1/2 | 5 |
| Ex. 4 | 100/2/0 | 10 |
| Ex. 5 | 100/2/0 | 5 |
| Ex. 6 | 100/2/0 | 1 |
| Ex. 7 | 100/4/0 | 100 |
| Ex. 8 | 100/4/0 | 20 |
| Ex. 9 | 100/4/0 | 10 |
| Ex. 10 | 100/4/0 | 2 |
| Com. Ex. 1 | 100/0/0 | 0 |
| Com. Ex. 2 | 100/4/0 | 0 |
| Com. Ex. 3 | 100/0/2 | 0 |

Test Example 1

In each group ten containers were employed to measure inside pressure thereof.

A pressure inside each of the containers obtained according to Examples 1 to 10 and Comparative Examples 1 to 3 was reduced to 460 mmHg (300 mmHg vac.) to give a evacuated container for collecting blood.

With respect to each evacuated container, an inside pressure was measured at 50°C every 3 weeks, i.e. at the time right after stoppering, 3 weeks after, 6 weeks after, 9 weeks after, 12 weeks after and 15 weeks after. As the inside pressure at the time right after stoppering was 100 %, retension rate (%) regarding degree of a vacuum was calculated from the measured value. The results are shown in Table 2.

4

## Table 2

| Number | Storage days at 50℃ | | | | | |
|---|---|---|---|---|---|---|
| | Time right after stoppering | 3 weeks after | 6 weeks after | 9 weeks after | 12 weeks after | 15 weeks after |
| Ex. 1 | 100 | 110.2 | 122.7 | 124.9 | 125.8 | 127.9 |
| Ex. 2 | 100 | 102.2 | 104.1 | 108.5 | 112.2 | 114.4 |
| Ex. 3 | 100 | 101.4 | 103.0 | 106.8 | 109.0 | 112.2 |
| Ex. 4 | 100 | 107.1 | 116.3 | 121.2 | 123.5 | 124.9 |
| Ex. 5 | 100 | 102.8 | 107.1 | 114.1 | 116.5 | 118.0 |
| Ex. 6 | 100 | 97.4 | 95.6 | 95.0 | 94.5 | 93.3 |
| Ex. 7 | 100 | 120.5 | 126.3 | 127.0 | 127.3 | 126.6 |
| Ex. 8 | 100 | 109.8 | 122.2 | 124.9 | 127.2 | 129.7 |
| Ex. 9 | 100 | 108.3 | 118.6 | 122.4 | 124.8 | 126.3 |
| Ex. 10 | 100 | 97.5 | 97.0 | 96.8 | 96.0 | 96.0 |
| Com. Ex. 1 | 100 | 96.5 | 94.8 | 93.5 | 92.2 | 90.8 |
| Com. Ex. 2 | 100 | 96.8 | 95.6 | 95.4 | 95.0 | 94.6 |
| Com. Ex. 3 | 100 | 96.3 | 94.5 | 93.6 | 92.7 | 91.4 |

EP 0 535 266 B1

Test Example 2

In the same manner as described in Test Example 1 except that a pressure inside each container was reduced to 310 mmHg (450 mmHg vac.), an inside pressure of the evacuated container for collecting blood was measured.

As the inside pressure at the time right after stoppering was 100 %, retension rate (%) regarding degree of a vacuum was calculated from the measured value. The results are shown in Table 3.

Table 3

| Number | Storage days at 50℃ | | | | | |
|---|---|---|---|---|---|---|
| | Time right after stoppering | 3 weeks after | 6 weeks after | 9 weeks after | 12 weeks after | 15 weeks after |
| Ex. 1 | 100 | 104.5 | 108.7 | 109.1 | 109.3 | 109.5 |
| Ex. 2 | 100 | 101.0 | 101.8 | 102.8 | 103.5 | 103.6 |
| Ex. 3 | 100 | 101.2 | 102.0 | 102.8 | 103.5 | 103.9 |
| Ex. 4 | 100 | 103.0 | 104.7 | 106.6 | 107.6 | 108.0 |
| Ex. 5 | 100 | 101.3 | 102.4 | 103.6 | 105.5 | 106.3 |
| Ex. 6 | 100 | 96.4 | 95.8 | 95.0 | 93.8 | 92.7 |
| Ex. 7 | 100 | 109.5 | 110.6 | 110.8 | 110.3 | 109.7 |
| Ex. 8 | 100 | 104.4 | 108.8 | 109.7 | 110.2 | 109.8 |
| Ex. 9 | 100 | 103.5 | 107.9 | 108.9 | 109.0 | 108.9 |
| Ex. 10 | 100 | 97.0 | 96.6 | 96.5 | 95.7 | 94.8 |
| Com. Ex. 1 | 100 | 95.4 | 93.7 | 90.6 | 88.0 | 86.4 |
| Com. Ex. 2 | 100 | 95.8 | 94.0 | 93.2 | 92.5 | 91.6 |
| Com. Ex. 3 | 100 | 95.5 | 93.9 | 91.4 | 90.0 | 88.5 |

Test Example 3

In the same manner as described in Test Example 1 except that a pressure inside each container was reduced to 30 mmHg (730 mmHg vac.), an inside pressure of the evacuated container for collecting blood was measured.

As the inside pressure at the time right after stoppering was 100 %, retension rate (%) regarding degree of a vacuum was calculated from the measured value. The results are shown in Table 4.

Table 4

| Number | Time right after stoppering | Storage days at 50°C | | | | |
|---|---|---|---|---|---|---|
| | | 3 weeks after | 6 weeks after | 9 weeks after | 12 weeks after | 15 weeks after |
| Ex. 1 | 100 | 98.5 | 98.0 | 97.5 | 96.2 | 95.6 |
| Ex. 2 | 100 | 97.0 | 96.5 | 96.5 | 96.1 | 95.4 |
| Ex. 3 | 100 | 97.2 | 96.8 | 96.4 | 95.9 | 95.2 |
| Ex. 4 | 100 | 97.9 | 97.6 | 96.7 | 96.2 | 95.7 |
| Ex. 5 | 100 | 97.0 | 96.5 | 96.3 | 96.1 | 95.3 |
| Ex. 6 | 100 | 96.5 | 93.5 | 92.3 | 91.1 | 89.9 |
| Ex. 7 | 100 | 99.0 | 98.0 | 97.5 | 96.8 | 95.9 |
| Ex. 8 | 100 | 98.7 | 97.7 | 97.1 | 96.6 | 95.7 |
| Ex. 9 | 100 | 98.2 | 97.8 | 97.2 | 96.2 | 95.8 |
| Ex. 10 | 100 | 96.7 | 94.1 | 93.5 | 91.8 | 90.5 |
| Com. Ex. 1 | 100 | 95.0 | 93.5 | 90.3 | 88.4 | 85.8 |
| Com. Ex. 2 | 100 | 96.0 | 93.8 | 92.0 | 90.5 | 88.6 |
| Com. Ex. 3 | 100 | 95.2 | 93.8 | 90.5 | 89.0 | 86.8 |

In Test Examples 1 to 3, the temperature 50°C was used which is fairly high in comparison with room temperature because the period, i.e. 15 weeks may be short as an observing period.

As is clear from the results shown in Tables 2 to 4, the higher the concentration of cobalt is, the faster oxygen gas is absorbed. Also, the higher the content of the polyamide having m-xylylene group is, the faster oxygen gas is absorbed.

Among the results in Tables 2 to 4, difference is recognized. The reason is that an amount of oxygen gas to be absorbed differs due to the difference as to degree of a vacuum. That is, the more the container for collecting blood is evacuated, the more an amount of oxygen gas inside the container is lowered.

Also, there was no influence on gas impermeability even if a blue pigment was used in the preparation of the tube of the present invention.

In addition to the ingredients used in the Examples, the Comparative Examples and the Test Examples, other ingredients can be used in the Examples, the Comparative Examples and the Test Examples as set forth in the specification to obtain substantially the same results.

## Claims

1.  An evacuated container for collecting blood, which comprises:
    a tube with one closed end and one open end;
    said tube prepared from a composition comprising 99.5 to 92 % by weight of polyethylene terephthalate, 0.5 to 8 % by weight of a polyamide having m-xylylene group and 1 to 100 ppm, based on said polyethylene terephthalate and said polyamide having m-xylylene group, of a salt of a transition metal; and
    a stoppering means for stoppering the open end of said tube to keep the inside of said tube at a vaccum.

2.  The evacuated container of Claim 1, wherein said polyamide having m-xylylene group is poly-m-xylylene adipamide.

3.  The evacuated container of Claim 1 or 2, wherein said composition contains a blue pigment or purple pigment.

## Patentansprüche

1.  Ein evakuierter Behälter für die Entnahme von Blut, welcher folgendes aufweist:
    einen Schlauch mit einem geschlossenen Ende und einem offenen Ende;
    wobei dieser Schlauch aus einer Zusammensetzung hergestellt wird, welche 99,5 bis 92 Gew.-% eines Polyethylenteraphthalats, 0,5 bis 8 Gew.-% eines Polyamids mit einer m-Xylylene-Gruppe und 1 bis 100 ppm, bezogen auf das Polyethylenterephthalat und das Polyamid mit der m-Xylylene-Gruppe, eines Salzes eines Übergangsmetalls enthält; sowie
    ein Verschlußmittel, um das offene Ende des Schlauches zu verschließen, um das Innere dieses Schlauches unter einem Vakuum zu halten.

2.  Evakuierter Behälter nach Anspruch 1,
    **dadurch gekennzeichnet**, daß
    das Polyamid mit einer m-Xylylene-Gruppe ein Poly-m-Xylelene Adipamid ist.

3.  Evakuierter Behälter nach einem der Ansprüche 1 oder 2,
    **dadurch gekennzeichnet**, daß
    diese Zusammensetzung ein blaues Pigment oder ein purpurnes Pigment enthält.

## Revendications

1.  Récipient sous vide destiné au prélèvement du sang, qui comprend :
    un tube avec une extrémité fermée et une extrémité ouverte;
    le dit tube est préparé à partir d'une composition comprenant 99,5 à 92% en poids de poly(téréphtalate d'éthylène), 0,5 à 8% en poids d'un polyamide ayant un groupe m-xylylène et 1 à 100 ppm, par rapport audit poly(téréphtalate d'éthylène) et audit polyamide ayant un groupe m-xylylène, d'un sel d'un métal de transition; et

un moyen de bouchage pour boucher l'extrémité ouverte dudit tube pour maintenir l'intérieur dudit tube sous vide.

2. Récipient sous vide selon la revendication 1, dans lequel le dit polyamide ayant un groupe m-xylylène est le poly(m-xylylène adipamide).

3. Récipient sous vide selon la revendication 1 ou 2, dans lequel ladite composition contient un pigment bleu ou un pigment pourpre.